Europäisches Patentamt

European Patent Office

Office européen des brevets

(19)

(11) Publication number: 0 165 051

A2

# EUROPEAN PATENT APPLICATION

(12)

(21) Application number: 85304151.5

(22) Date of filing: 12.06.85

(51) Int. Cl.⁴: G 01 N 27/90

(30) Priority: 15.06.84 US 621003

(43) Date of publication of application:
18.12.85 Bulletin 85/51

(84) Designated Contracting States:
BE DE FR GB IT SE

(71) Applicant: WESTINGHOUSE ELECTRIC CORPORATION
Westinghouse Building Gateway Center
Pittsburgh Pennsylvania 15235(US)

(72) Inventor: Mark, Richard Hartley, Jr.
641 5th Street
Pitcairn Pennsylvania(US)

(74) Representative: van Berlyn, Ronald Gilbert
23, Centre Heights
London, NW3 6JG(GB)

(54) Color display of related parameters.

(57) A method and apparatus for producing a color strip display (18) of eddy current test data from a test signal produced by an eddy current detector (1) which varies in amplitude and in phase relative to a reference signal as the detector (1) is displaced along a test body. To produce the display (18), signals representative of the relative displacement of the detector (1), signals representative of the amplitude o the detector signal, and signals representative of the relative phase shift of the detector signal from the reference signal are produced, for elected frequencies. The representative signals are processed and transmitted to a color display device (15) for producing a strip display (18) of the signal at each selected frequency. The single composite display produced for each frequency represents the relative displacement of the detector (1) along the body (2), the amplitude of the detector signal, and the relative phase of the detector signal depicted by a colored trace of the signal peak, the hue of which corresponds to the depth of the fault.

FIG. I

1
## COLOR DISPLAY OF RELATED PARAMETERS

The present invention relates to a method and an apparatus for producing a single composite display of several related but independently variable parameters describing an event.

The invention is particularly applicable to the evaluation of test data produced by an eddy current detector which contain information describing the position of the detector relative to the object being tested; the amplitude of the detector output signal, and phase shifts between the detector output signal and a phase reference signal.

Known eddy current detectors include two coils mounted in adjacent arms of an electrical bridge. An alternating current is passed through the bridge creating an electromagnetic field which induces eddy currents within the metallic body under test. These eddy currents will in turn generate electromagnetic fields acting in opposition to the initial field and thus vary the impedance of one or both coils, thereby creating in the bridge an unbalance voltage which is the difference between the voltages across the two coils. Thus, the waveform of the unbalance voltage is composed of a carrier wave at the alternating current frequency modulated by the unbalance voltage caused by the impedance variations in the two coils.

Heretofore, evaluation of eddy current test data has involved generation of a strip chart display in which

2    0165051

the amplitude of bridge unbalance voltage is plotted along the ordinate and displacement of the eddy current detector along a surface of the metal body being tested is plotted along the abscissa.

Such evaluation further includes analysis of the phase displacement between the applied alternating current and the unbalance bridge voltage for a section of the strip chart in which the waveform has an unusual configuration. This is achieved by obtaining representations of the unbalance voltage components which are in phase with and in quadrature, or 90° out of phase, with the alternating current applied to the bridge. A Lissajous figure representing a plot of the in-phase amplitude vs. the quadrature phase amplitude is then generated to permit more detailed analysis of the defect which produced the associated waveform segment. For example, a Lissajous figure permits determination of the depth of a crack or of the type of defect. However, a Lissajous figure does not contain any information relating to detector position along the test body surface. This general technique is described, for example, in U.S. Patent No. 3,895,290.

Thus, current fault inspection techniques require at least two independent displays, none of which contain all available information relating to detector position, unbalance voltage amplitude and unbalance voltage phase variation.

The invention has as its principle object the provision of a single composite display of the output signal of a device at a selected frequency representing simultaneous variation of several independent parameters that describe an event. With this object in view, the present invention resides in a method for producing a color strip display of a signal produced by an eddy current detector (1) which varies in amplitude and in phase relative to a reference signal as the detector (1) is displaced relative to a test body (2), wherein a signal representative of the relative displacement of the detector (1); a signal representative of the amplitude of the detector signal, and a signal representative of the relative phase shift of the detector signal from the reference signal are produced characterized in that the representative signals are processed to provide a single composite signal for selected test frequencies and are transmitted to a color display device (15) for producing a strip display (18) for each frequency representative of the relative displacement of the detector (1) within the body (2), the type of flaw detected depicted by the amplitude of the composite signal and the depth of the detected fault depicted by the color of the peak value of the composite curve.

Thus, the invention provides a color strip display of the output signal from an eddy current detector in which the signal may be a combination of several frequencies and varies in amplitude and phase relative to a reference signal as the detector is displaced relative to a test body. The output signal is then demodulated and a color strip display provided for each test frequency in which signal variation at that frequency represents the variation of at least three independent parameters descriptive of fault detection in the body. In the preferred embodiment of the invention, the color strip display of the signal from the eddy current detector for a selected frequency is that of a modulated sinusoidal waveform extending along an axis corresponding to an axis of the body under test. Thus, each point along the waveform represents a location along the axis of the body under test; the amplitude of the waveform corresponds to the amplitude of the unbalance voltage between the two coils of the detector which describes the type of flaw detected; and the color of the waveform corresponds to the phase shift of the unbalance voltage signal from the test signal such that variation in hue will indicate the severity of the flaw detected in body.

The preferred embodiment of the invention will be described, by way of example, with reference to the accompanying drawings in which:

Figure 1 illustrates the voltages induced across the two coils of an eddy current detector when moving past a flaw in the body being tested.

Figure 2 shows curve 28 representing the resulting bridge unbalance voltage which is the difference between curves 25 and 26 of Figure 1.

Figure 3 is a waveform diagram illustrating a novel principle of displays according to the invention.

Figure 4 is a block circuit diagram of apparatus for implementing the invention.

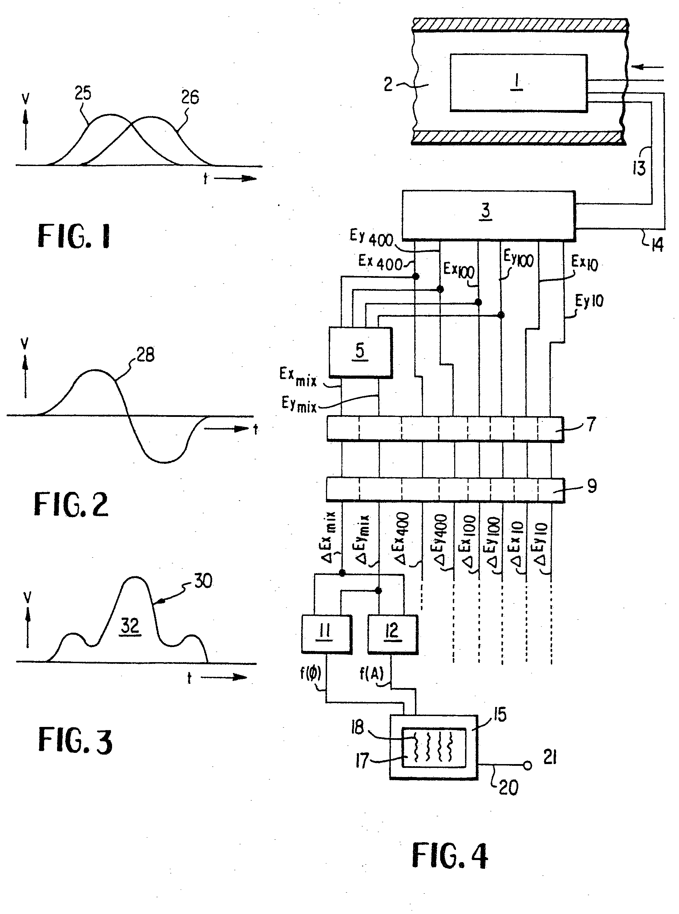

Referring to Figures 1 and 2, the type of test data is shown which is generated by an eddy current detector moving past a flaw in a body to be tested. The respective voltage curves 25 and 26 are offset in time because they are spaced apart in the direction of movement of the eddy current detector. The curves shown represent modulation envelopes of the carrier wave, or waves, but not phase variations occurring in the carrier wave, or waves.

The duration of each curve 25, 26 depends on the length of the flaw in the direction of detector movement while the peak amplitude of each curve depends on the extent of the flaw. The carrier wave shift in the coil voltage is a function of the nature, and particularly the depth, of the flaw.

When performing eddy current testing, the alternating current signal applied to the bridge of an eddy current detector may be a sinusoidal current signal at a single fundamental frequency or it may be a combined signal composed of the fundamental frequency and several harmonic frequencies. By way of example, the alternating current may be composed of sinusoidal carrier frequency f, and three harmonic test frequencies 400 kHz, 100 kHz and 10 kHz so that the bridge unbalance voltage will be composed of three respective signals each a modulated version of the carrier frequency. Since frequency is related to the depth in the test body at which flaws can be detected, a procedure utilizing several different frequencies is advantageous over use of a single frequency.

For each test frequency, f, the corresponding unbalance voltage signal will be divided into a component $Ex_f$ which is in phase with the associated test frequency and a component $Ey_f$ which is in quadrature with the associated test frequency.

In addition, to eliminate unwanted signals, in-phase and quadrature components of the signal are calculated based on a mixture of the components associated with several carrier frequencies. For example, the frequencies in the following component signals would typically be calculated for display in order to observe certain types of flaws:

$$Ex_{mix} = a \cdot Ex_{400} + b \cdot Ex_{100} + c \cdot Ey_{400} + d \cdot Ey_{100};$$

$$Ey_{mix} = e \cdot Ey_{400} + f \cdot Ey_{100} + g \cdot Ex_{400} + h \cdot Ex_{100};$$

where $Ex_{400}$ and $Ex_{100}$ are the in-phase components of the 400 kHz and 100 kHz unbalance voltage signals, $Ey_{400}$ and $Ey_{100}$ are the quadrature components of the 400 kHz and 100 kHz unbalance voltage signals, etc. The coefficients a-h are derived statistically, according to the principles known in the art, under consideration of the particular body, the types of flaws to be observed, and the signals to be eliminated.

An example display according to the invention is derived from the value pairs: $Ex_{400}$, $Ey_{400}$; or $Ex_{100}$, $Ey_{100}$; or $Ex_{10}$, $Ey_{10}$; or $Ex_{mix}$, $Ey_{mix}$. Four displays are produced simultaneously, each based on a respective value pair.

In contrast to the prior art in which fault display information is derived from the amplitudes of the unbalance voltage components, the signal values for a display according to the invention are based on the rate of change of the unbalance voltage components.

Figure 3 shows a curve 30 which represents the absolute value of the rate of change, or first time derivative, of curve 28 of Figure 2. Curve 30 is an approximation of, and corresponds conceptually to, the envelope of a display according to the invention with respect to a flaw which produced unbalance voltage curve 28. In a display according to the invention, the region 32 of the peak portion of curve 30 will have a trace color, the hue of which corresponds to the depth of the associated flaw.

Utilization of rate-of-change values offers the advantage of eliminating data falsifications which could result from voltage fluctuations. For example, even if curve 28 of Figure 2 should shift relative to its voltage reference level, this would not affect the corresponding rate-of-change values.

One embodiment of a system for implementing the invention is shown in Figure 4. An eddy current detector 1, which can be constructed according to conventional practice and which includes two coils connected in a bridge circuit, is mounted in a tube 2 to be tested for displacement along the tube axis.

Signals are conducted from detector 1 to a signal processing circuit 3 via conductors 13 and 14. One of these conductors carries the bridge unbalance voltage signal and the other conductor carries a signal corresponding to the alternating current and constituting the phase reference for deriving in-phase and quadrature components of the bridge unbalance voltage signal associated with each test frequency.

In circuit 3, which can be constructed according to known principles, the unbalance voltage signals are separated according to frequency and each signal is then divided, for example, by correlation or mixing, into its $E_x$ and $E_y$ components, as shown at the outputs of circuit 3.

The components associated with the frequencies of 400 and 100 kHz are conducted to a combining circuit 5, also constructed according to known principles, in which the components $Ex_{mix}$ and $Ey_{mix}$ are formed.

All Ex and Ey components are conducted to a sampling circuit 7 which samples each component at a sufficiently high rate to preserve the information contained therein and then supplies the successive sample values of each component to a difference circuit 9 where the difference between successive sample values of each component is generated. The broken lines in block 7 and 9 indicate that each component remains in a separate signal processing channel. Circuits 7 and 9 can be constructed according to known principles.

The successive difference values, $\Delta Ex$ and $\Delta Ey$, derived for each component pair are supplied to a respective phase function circuit 11 and amplitude function circuit 12. Only the function circuits associated with $\Delta Ex_{mix}$ and $\Delta Ey_{mix}$ are shown, for ease of understanding. In the complete system, similar function circuits will be provided for each frequency component pair.

Circuit 11 generates successive signal values which are a function of

$$\phi = \text{arc tan} \frac{\Delta Ey_{mix}}{\Delta Ex_{mix}}$$

for each pair of difference values appearing simultaneously at the outputs of circuit 9. These signal values are supplied to a color control input of a color graphics display unit 15 having a screen 17 to control the hue of an associated trace 18 constituting the waveform associated with $Ey_{mix}$ and $Ex_{mix}$.

The signal produced by circuit 11 is selected to vary the color content of the display in the region of each peak of the associated trace over a range extending, for example, from yellow-green through yellow and orange to red, the yellow-green end of the range corresponding to a minimum value of phase and, for example, a crack depth of less than 20% of the tube wall thickness, the red end corresponding to a maximum value of $\phi$ and, for example, a crack extending completely through the tube wall. In general, $\phi$ will vary as a function of the depth of a flaw, such as a crack.

Circuit 12 generates signal values which are a function of the amplitude of the mixture signal. Specifically, the signal values produced by circuit 12 are proportional to

$$\left| \sqrt{(\Delta\,Ex_{mix})^2 + (\Delta\,Ey_{mix})^2}\; \right|.$$

These signal values are supplied to a deflection input of unit 15 to control the horizontal deflection of the trace in a single direction from its axis, or base line. In general, the amplitude value produced by circuit 12 will be representative of the extent of a flaw, such as a crack.

In the illustrated arrangement, the axis, or base line, of each trace 18 is vertical and each point along the axis corresponds to a respective position of detector 1 along the axis of tube 2. In order to control the displacement along the vertical axis of each trace 18, unit 15 is provided with a vertical deflection signal via a conductor 2C connected to an input contact 21. This signal is correlated with the displacement of detector 1.

Circuits 11 and 12 can be constructed according to known principles.

Unit 15 can also be of the type having only one color control input and one horizontal deflection input. In this case, each circuit 11 and each circuit 12, there being four of each in the complete system, could be connected to a multiplexer which supplies a signal value from each circuit in turn to the associated terminal input. An incremental horizontal deflection voltage would be added to each successive amplitude signal to associate the resulting deflection signal with its corresponding trace.

In the resulting display, each trace 18 will have, at each point along its axis, an amplitude representative of the rate of change of the associated unbalance voltage signal and each peak region of the trace will have a color whose hue is representative of the ratio of the incremental change in the quadrature component to the incremental change in the in-phase component of the unbalance voltage signal.

Since the trace extends along an axis correlated with the position of detector 1 along the axis of tube 2, trace 18 will additionally provide information as to the location, length and type of flaw being detected.

Normally, the test data values produced by circuits 11 and 12 will be recorded for study at a later time. For this purpose, the successive values of $f(\phi)$ and $f(\Delta)$ can be recorded in digital form. One system which has been used to produce a display according to the invention from such recorded signals was composed of a Data General MV Series Computer, a Data General Dasher D 200 terminal including an operating keyboard and monitor and a Raster Technologies Model 120 or 125 color graphics display system.

The display generated by this equipment forms an envelope which is filled in with the appropriate color, i.e., a color field extends from the amplitude curve to the base line. This facilitates observation of the color information.

The display according to the invention can also be generated in the form of a color printout.

10

CLAIMS:

1. A method for producing a color strip display of a signal produced by an eddy current detector (1) which varies in amplitude and in phase relative to a reference signal as the detector (1) is displaced relative to a test body (2), wherein a signal representative of the relative displacement of the detector (1), a signal representative of the amplitude of the detector signal, and a signal representative of the relative phase shift of the detector signal from the reference signal are produced characterized in that the representative signals are processed to provide a single composite signal for selected test frequencies and are transmitted to a color display device (15) for producing a strip display (18) for each frequency representative of the relative displacement of the detector (1) within the body (2), the type of flaw detected depicted by the amplitude of the composite signal and the depth of the detected fault depicted by the color of the peak value of the composite curve.

2. A method as defined in claim 1, characterized in that the depth of the detected fault generates a phase shift in the detector signal causing the color of the display to extend over the full amplitude of the display.

3. A method as defined in claim 1 or 2, characterized in that the signal representative of the amplitude of the detector signal is proportional to the rate of change of the unbalance voltage generated by the detector upon detection of a fault.

4. A method as defined in claim 1, 2 or 3, characterized in that the signal representative of the relative phase of the detector signal is proportional to the angle whose tangent is the ratio of the incremental change in the amplitude of the component of the detector signal which is in quadrature with the reference signal to the amplitude of the component of the detector signal which is in phase with the reference signal.

5. A method as defined in any of claims 1 to 4, characterized in that the amplitude of the strip display contains a peak value representing each flaw encountered by the detector, and the hue of the display includes a color region enclosed by each amplitude peak and having a hue representative of the depth of the associated flaw.

6. A method as defined in claim 5, characterized in that the strip display has a reference line representing the path and the color region extends from the reference line and is coextensive with the strip display amplitude.

7. A method as defined in any of claims 1 to 6, wherein the detector produces a plurality of signals, characterized in that each of said signals is associated with a reference signal having a respectively different frequency, and representation of said signals is so carried out as to generate a plurality of strip displays each based on a respective detector signal.

## FIG. I

25   26

v

t

## FIG. 2

28

v

t

## FIG. 3

30

32

v

t

2

1

13

14

3

$Ey\,400$

$Ex\,400$   $Ex\,100$   $Ey\,100$   $Ex\,10$

$Ey\,10$

5

$Ex_{mix}$

$Ey_{mix}$

7

9

$\Delta Ex_{mix}$   $\Delta Ey_{mix}$   $\Delta Ex\,400$   $\Delta Ey\,400$   $\Delta Ex\,100$   $\Delta Ey\,100$   $\Delta Ex\,10$   $\Delta Ey\,10$

11   12

$f(\phi)$   $f(A)$

18   15

17

21

20

## FIG. 4